Europäisches Patentamt

European Patent Office

Office européen des brevets

(19)

(11) **EP 1 703 722 A1**

(12) **EUROPEAN PATENT APPLICATION**
published in accordance with Art. 158(3) EPC

(43) Date of publication:
**20.09.2006 Bulletin 2006/38**

(51) Int Cl.:
***H04N 5/232*** *(2006.01)* ***H04N 9/07*** *(2006.01)*

(21) Application number: **04819970.7**

(22) Date of filing: **08.12.2004**

(86) International application number:
**PCT/JP2004/018296**

(87) International publication number:
**WO 2005/055590 (16.06.2005 Gazette 2005/24)**

(84) Designated Contracting States:
**DE FR GB**

(30) Priority: **08.12.2003 JP 2003408885**

(71) Applicant: **Olympus Corporation**
**Tokyo 151-0072 (JP)**

(72) Inventor: **OHNO, Yoshinori**
**c/o Intellectual Property Dept.**
**Hachioji-shi**
**Tokyo 192-8512 (JP)**

(74) Representative: **von Hellfeld, Axel**
**Wuesthoff & Wuesthoff**
**Schweigerstrasse 2**
**81541 München (DE)**

(54) **IMAGE INTERPOLATION APPARATUS AND IMAGE INTERPOLATION METHOD**

(57) An image interpolation apparatus which generates a single frame of image data from a plurality of frames of image data consecutively input in time-series order, comprises an index value computing section (15) which calculates an index value for a specific direction from at least one group of pixel data arranged in the specific direction in the vicinity of the pixel position in said plurality of frames of image data corresponding to the pixel position of the single frame of image data, a direction decision section (16) which detects a direction in which there is a strong correlation in the pixel position on the basis of the index value calculated at the index value computing section (15), a switching section (17) which selects operation data to be used from said plurality of frames of image data on the basis of the direction detected by the direction decision section (16) and switching operation data, and an interpolation section (18) which determines pixel data in the pixel position using the operation data switched by the switching section (17).

F I G. 1

EP 1 703 722 A1

**Description**

Technical Field

This invention relates to an image interpolation apparatus and an image interpolation method which generate high-quality frame images from a plurality of frames of image data consecutively input in time-series order.

Background Art

The technique for interpolating image data is required in various cases, including a case where an image is enlarged, a case where the resolution of an image is increased, and a case where an image obtained by interlaced scanning is converted into a progressive-scanned image.

A conventional interpolating method has employed an approach of, for example, when the number of lines is increased in the vertical direction, using the value of the line immediately above or below the line to be interpolated without change or the average of the value of the upper line and that of the lower line. Such a method has a problem: when there is an oblique line on the photographic subject, the interpolated image has a ragged outline or gets blurred.

To overcome this problem, U.S. Pat. No. 5,825,429 has proposed the following method. Of the field data obtained by interlaced scanning, when the data of three consecutive fields, a first field, a second field, and a third field, are given, the image of the second field is converted into a frame image. To do this, it is determined whether there is a movement between images in a window set in each of the first field image and third field image, the position of the window corresponding to a pixel to be interpolated in the second field. Then, according to the result of the determination, interpolation is performed.

Whether there is a movement is determined by adding the absolute values in pixel level of difference between the window of the first field and that of the third field corresponding to the pixel position to be interpolated and determining whether the obtained additional value exceeds a predetermined value. If it has been determined that there is a movement between the windows, interpolated image data is created on the basis of the pixels vertically adjacent to each other since there is a stronger correlation in the window of the second field image than the correlation between the window of the first field and that of the third field. If it has been determined that there is no movement between the windows, a check is made in the direction in which there is a correlation in the windows. Specifically, data on the pixels above and below the pixels horizontally adjacent to the position to be interpolated are extracted, the additional value of these data is found, and it is determined whether the obtained additional value has been strongly increased or decreased than the additional value of the pixels present in the horizontal direction. If the obtained additional value has not been increased or decreased that way, an interpolated value is generated using the image data above and below the position to be interpolated. If the obtained additional value has been increased or decreased that way, it is determined that the image in that part is a step-like area. Then, interpolated data is generated from pixel data with strong correlation in three directions, that is, not only above and below the pixel to be interpolated but also obliquely above and below the pixel to be interpolated.

However, in the method disclosed in U.S. Pat. No. 5,825,429, when a check is made to see if there is a movement of the subject in the area to be interpolated, a window is generated around the position to be interpolated. Then, the absolute difference value of the corresponding pixels in the preceding and following fields of each of all the pixels in the window has to be calculated and added. Therefore, the calculations are complicated.

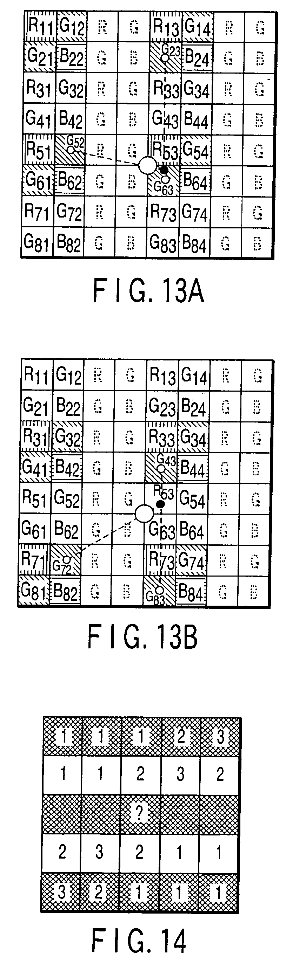

If no movement has been detected between images in the window, it is determined whether there is an oblique line in the target area and an interpolated value for the corresponding position on the second field from the data in the first and third field is calculated. However, in such a method, a bad decision can be made in some cases. FIG. 14 shows a case where a bad decision is made. In FIG. 14, suppose the value of the pixel marked with ? in the middle of the figure will be estimated. The numerals in FIG. 14 indicate pixel value data. The hatched pixels indicate those from which no data has been obtained. In the case of the data array as shown in FIG. 14, if the pixel values above and below the pixels adjacent to the position to be interpolated are added, the additional value becomes the same in all cases, which means that the additional value neither increases nor decreases. Therefore, it is determined that the peripheral part is not a step-like distribution and the arithmetic average of the upper and lower pixels is found as an interpolated value. In FIG. 14, the direction in which there is a correlation has been decided erroneously, although there really is a correlation in an oblique direction.

Disclosure of Invention

It is, accordingly, an object of the present invention to provide an image interpolation apparatus and an image interpolation method which are capable of generating a high-accuracy interpolated image.

According to a first aspect of the present invention, there is provided an image interpolation apparatus which generates a single frame of image data from a plurality of frames of image data consecutively input in time-series order, the image interpolation apparatus characterized by comprising:

index value computing means for calculating an index value for a specific direction from at least one group of pixel data arranged in the specific direction in the vicinity of the pixel position in said plurality of frames of image data corresponding to the pixel position of the single frame of image data;

direction decision means for detecting a direction in which there is a strong correlation in the pixel position on the basis of the index value calculated at the index value computing means;

switching means for selecting operation data to be used from said plurality of frames of image data on the basis of the direction detected by the direction decision means and switching operation data; and

interpolation means for determining pixel data in the pixel position using the operation data switched by the switching means.

According to a second aspect of the present invention, there is provided an image interpolation apparatus which generates a single frame of image data from a plurality of frames of color image data consecutively input in time-series order from an image capturing device having a color filter in front of it, the image interpolation apparatus characterized by comprising:

index value computing means for calculating an index value for a specific direction from at least one group of pixel data arranged in the specific direction in the vicinity of the pixel position in said plurality of frames of image data corresponding to the pixel position of the single frame of image data;

direction decision means for detecting a direction in which there is a strong correlation in the pixel position on the basis of the index value calculated at the index value computing means;

switching means for selecting operation data to be used from said plurality of frames of image data for each color of the color filter on the basis of the direction detected by the direction decision means and switching operation data; and

interpolation means for determining pixel data in the pixel position using the operation data switched by the switching means.

According to a third aspect of the present invention, there is provided an image interpolation apparatus which generates a single frame of image data whose size is changed in magnification at least one of the horizontal direction and the vertical direction from a plurality of frames of image data consecutively input in time-series order from an image pickup device having a color filter in front of it, the image interpolation apparatus characterized by comprising:

index value computing means for extracting discrete pixel data from each of said plurality of frames of image data, selecting at least one group of image data arranged in a specific direction from the pixel data in the vicinity of the pixel position corresponding to the pixel position of the single frame of image data in the extracted pixel data, and calculating an index value for the specific direction;

direction decision means for detecting a direction in which there is a strong correlation in the pixel position on the basis of the index value calculated at the index value computing means;

switching means for selecting operation data to be used from the discrete pixel data for each color of the color filter on the basis of the direction detected by the direction decision means and switching operation data; and

interpolation means for determining pixel data in the pixel position using the operation data switched by the switching means.

According to a fourth aspect of the present invention, there is provided an image interpolation method which generates a single frame of image data from a plurality of frames of image data consecutively input in time-series order, the image interpolation method characterized by comprising:

an index value computing step of calculating an index value for a specific direction from at least one group of pixel data arranged in the specific direction in the vicinity of the pixel position in said plurality of frames of image data corresponding to the pixel position of the single frame of image data;

a direction decision step of detecting a direction in which there is a strong correlation in the pixel position on the basis of the index value;

a switching step of selecting operation data to be used from said plurality of frames of image data on the basis of the direction in which there is a strong correlation and switching operation data; and

an interpolation step of determining pixel data in the pixel position using the operation data.

According to a fifth aspect of the present invention, there is provided an image interpolation method which generates a single frame of image data from a plurality of frames of image data consecutively input in time-series order from an image pickup device having a color filter in front of it, the image interpolation method characterized by comprising:

an index value computing step of calculating an index value for a specific direction from at least one group of pixel data arranged in the specific direction in the vicinity of the pixel position in said plurality of frames of image data corresponding to the pixel position of the single frame of image data;
a direction decision step of detecting a direction in which there is a strong correlation in the pixel position on the basis of the index value;
a switching step of selecting operation data to be used from said plurality of frames of image data for each color of the color filter on the basis of the direction in which there is a strong correlation and switching operation data; and
an interpolation step of determining pixel data in the pixel position using the operation data.

According to a sixth aspect of the present invention, there is provided an image interpolation method which generates a single frame of image data whose size is changed in magnification at least one of the horizontal direction and the vertical direction from a plurality of frames of image data consecutively input in time-series order from an image pickup device having a color filter in front of it, the image interpolation method characterized by comprising:

an index value computing step of extracting discrete pixel data from each of said plurality of frames of image data, selecting at least one group of image data arranged in a specific direction from the pixel data in the vicinity of the pixel position corresponding to the pixel position of the single frame of image data in the extracted pixel data, and calculating an index value for the specific direction;
a direction decision step of detecting a direction in which there is a strong correlation in the pixel position on the basis of the index value;
a switching step of selecting operation data to be used from the input discrete pixel data for each color of the color filter on the basis of the direction in which there is a strong correlation and switching operation data; and
an interpolation step of determining pixel data in the pixel position using the operation data.

According to a seventh aspect of the present invention, there is provided an image interpolation apparatus which generates a single frame of color image data whose size is changed in magnification at least one of the horizontal direction and the vertical direction from a plurality of frames of color image data consecutively input in time-series order, the image interpolation apparatus characterized by comprising:

index value computing means for extracting discrete pixel data from each of said plurality of frames of color image data, selecting at least one group of pixel data arranged in a specific direction from the pixel data in the vicinity of the pixel position corresponding to the pixel position of the single frame of image data in the extracted pixel data, and calculating an index value for the specific direction;
direction decision means for detecting a direction in which there is a strong correlation in the pixel position on the basis of the index value calculated at the index value computing means;
switching means for selecting operation data to be used from the discrete pixel data for each of a plurality of primary color constituting the color image data on the basis of the direction detected by the direction decision means and switching operation data; and
interpolation means for determining pixel data in the pixel position using the operation data switched by the switching means.

According to an eighth aspect of the present invention, there is provided an image interpolation method which generates a single frame of color image data whose size is changed in magnification at least one of the horizontal direction and the vertical direction from a plurality of frames of color image data consecutively input in time-series order, the image interpolation method characterized by comprising:

index value computing step for extracting discrete pixel data from each of said plurality of frames of color image data, selecting at least one group of pixel data arranged in a specific direction from the pixel data in the vicinity of the pixel position corresponding to the pixel position of the single frame of image data in the extracted pixel data, and calculating an index value for the specific direction;
a direction decision step of detecting a direction in which there is a strong correlation in the pixel position on the basis of the index value;
a switching step of selecting operation data to be used from the discrete pixel data for each of a plurality of primary colors constituting the color image data on the basis of the direction in which there is a strong correlation and switching operation data; and
an interpolation step of determining pixel data in the pixel position using the operation data.

Brief Description of Drawings

FIG. 1 shows the configuration of an image interpolation apparatus according to a first embodiment of the present invention;
FIG. 2A shows an example of the data stored in a first memory when thinning-out sampling is done;
FIG. 2B shows an example of the data stored in a second memory when thinning-out sampling is done;
FIG. 2C shows an example of the data obtained from the first and second memories;
FIG. 2D shows an example of the data stored in the first memory when the arithmetic average of consecutive pixel data is calculated and the result is sampled;
FIG. 2E shows an example of the data stored in the second memory when the arithmetic average of consecutive pixel data is calculated and the result is sampled;
FIG. 3 shows a detailed configuration of the index value computing section of FIG. 1;
FIG. 4 shows an example of the image data taken in by the data taking-in section during interpolation;
FIG. 5 shows a combination of pixels used in detecting a direction in which there is a strong correlation;
FIG. 6 shows an example of pixels used according to a direction in which there is a correlation;
FIG. 7 shows the configuration of an image interpolation apparatus according to a second embodiment of the present invention;
FIG. 8 shows an example of sampling done in the horizontal direction;
FIG. 9A shows an example of the data stored in a first memory when the size of an image is reduced by half;
FIG. 9B shows an example of the data stored in a second memory when the size of an image is reduced by half;
FIG. 9C shows an example of the data obtained from the first and second memories;
FIG. 10 shows an example of the image data taken in by the data taking-in section during interpolation;
FIG. 11 shows a combination of pixels used in detecting a direction in which there is a strong correlation;
FIG. 12 shows an example of pixels (only G) used according to a direction in which there is a correlation;
FIG. 13A is a diagram to help explain a method of interpolating the top field when there is a strong correlation in the vertical direction;
FIG. 13B is a diagram to help explain a method of interpolating the bottom field when there is a strong correlation in the vertical direction; and
FIG. 14 shows a pixel data array causing erroneous decision in a direction in which there is a correlation in the prior art.

Best Mode for Carrying Out the Invention

Hereinafter, referring to the accompanying drawings, the best mode for carrying out the invention will be explained.

[First Embodiment]

(Configuration)

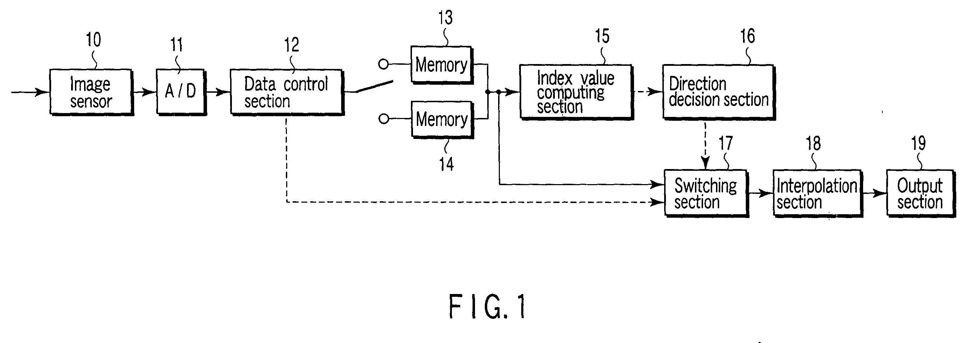

As shown in FIG. 1, in an image interpolation apparatus according to a first embodiment of the present invention, the image data obtained in capturing by an image sensor 10 is converted into digital image data by an A/D converter 11. Under the control of a data control section 12, the image data output from the A/D converter 11 is transferred to a first memory 13 or a second memory 14 connected to the data control section 12 and stored there.
An index value computing section 15 is connected to the first memory 13 and second memory 14. A direction decision section 16 is connected to the index value computing section 15. The direction decision section 16 receives the data output from the index value computing section 15 and operates on the basis of the data. The data control section 12, first memory 13, second memory 14, and direction decision section 16 are connected to a switching section 17. The switching section 17 operates on the basis of the control of the data control section 12 and the data output from the direction decision section 16. An interpolation section 18 is connected to the switching section 17.
The image data output from the interpolation section 18 is transferred to an output section 19, such as a monitor or a memory card, which displays the data or records and stores the data.
In FIG. 1, the broken line indicates the flow of the control signal.

(Operation)

The signal flow in the above configuration will be explained.

The image sensor 10 outputs analog image data corresponding to the incoming subject image passed through a lens system and a low-pass filter (which are not shown). The analog image data is converted into digital image data by the A/D converter 11. In the first embodiment, the image sensor 10 is assumed to be a monochromatic one with no color filter.

Under the control of the data control section 12, the image data output from the A/D converter 11 is selectively stored in the first memory 13 and second memory 14 each functioning as a frame memory. Specifically, the data control section 12 switches connections between the first memory 13 and the second memory 14 and transfers data to the first memory 13 and second memory 14 alternately in such a manner that consecutive image data are stored in the two memories 13, 14. For example, in the case of interlaced scanning, the image data composed of the pixel data of odd-numbered lines are stored in one memory, and the image data composed of the pixel data of even-numbered lines are stored in the other memory.

The index value computing section 15 connected to the two memories 13, 14 receives the pixel data around the position to be interpolated from the memories 13, 14 and finds an index value for a specific direction. The index value for the specific direction found by the index value computing section 15 is sent to the direction decision section 16. On the basis of the index value, the direction decision section 16 determines in which direction there is a strong correlation in the position to be interpolated.

The switching section 17 switches the operation according to the control of the data control section 12 and the direction with a strong correlation output from the direction decision section 16 and sends the image data necessary for interpolation from the first memory 13 or second memory 14 to the interpolation section 18.

The interpolation section 18 finds an interpolated value using the pixel data received from the switching section 17 and creates interpolated image data. Then, the image data created by the interpolation section 18 is displayed on a display medium, such as a monitor, or is recorded on a recording medium, such as a memory card, at the output section 19.

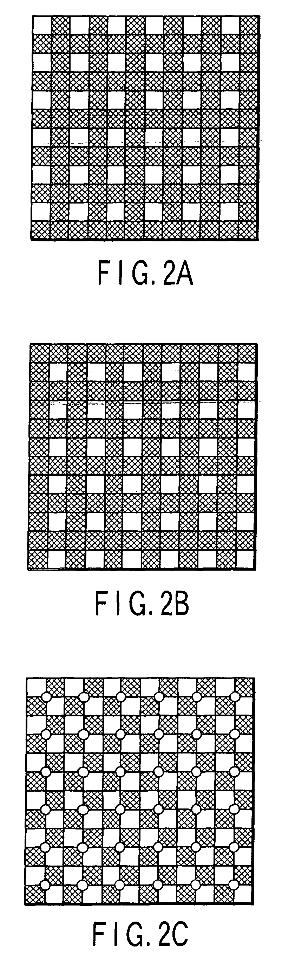

Hereinafter, the operation of each section will be explained in more detail with reference to FIGS. 2A to 2E. FIGS. 2A to 2E show an example of the data format stored in the first memory 13 and second memory 14 when the size of an image is reduced by half in the first embodiment. In FIGS. 2A to 2E, of the input data to the data control section 12, the white pixels represent the pixels from which data are read and stored in the memory 13 or 14. The hatched pixels represent the pixels from which no data is read, that is, the pixels whose data are not stored.

Specifically, when thinning-out sampling is done, the data (FIG. 2A) transferred from the data control section 12 to the first memory 13 and stored there and the data (FIG. 2B) transferred from the data control section 12 to the second memory 14 and stored there are designed to be data at intervals of one pixel in the horizontal direction and data at intervals of one line in the vertical direction. At this time, the data control section 12 shifts the unread lines in frames and performs control in such manner that read pixel positions do not overlap with one another in consecutive image data. Then, under the control of the data control section 12, the switching section 17 combines the data stored in the memories 13 and 14 with each other, thereby producing the data as shown in FIG. 2C.

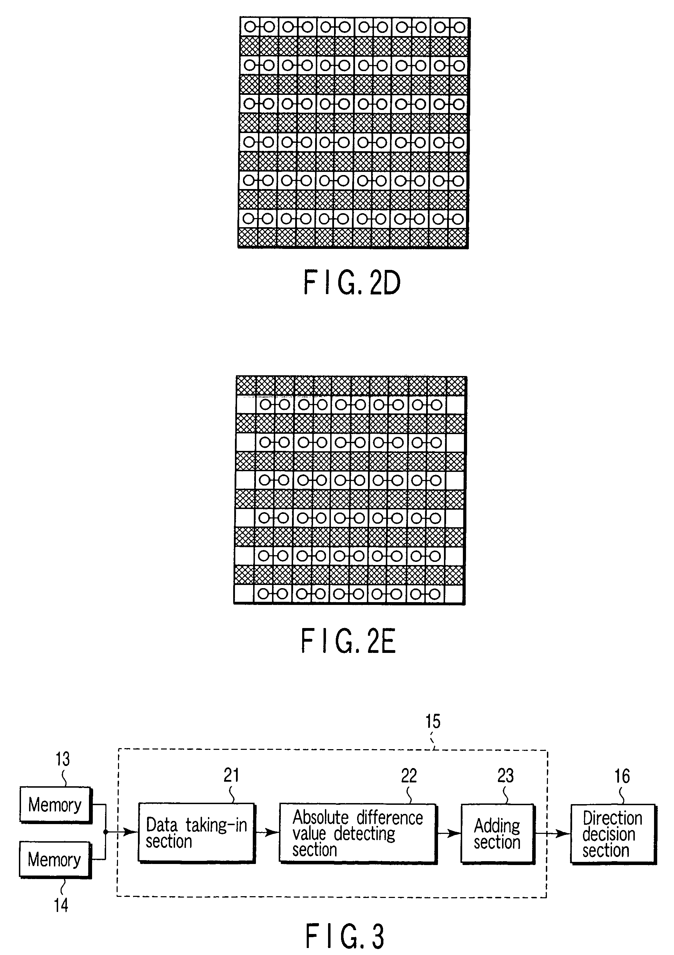

When the arithmetic average of consecutive pixel data is calculated and the result is sampled, the data stored in the first memory 13 is as shown in, for example, FIG. 2D and the data stored in the second memory 14 is as shown in, for example, FIG. 2E. In this case, the data control section 12 stores in the memories 13, 14 the values obtained by adding the pixel data connected with the white circle in the figures, that is, the data control section 12 calculates the arithmetic average of the data on two consecutive pixels in the horizontal direction and stores the result in the memories 13, 14. As a result, under the control of the data control section 12, the switching section 17 combines the data stored in the two memories 13, 14 with one another, thereby producing the data corresponding to the array shown in FIG. 2C as in the thinning-out sampling.

Then, the interpolation section 18 finds the interpolated values in the positions shown by the white circles in FIG. 2C, thereby creating an interpolated image reduced by half.

While in the example, the image size has been reduced by half, the reduction ratio is, of course, not limited to half in the present invention.

For example, the same holds true even when the image size is reduced by one third. In this case, however, it is necessary to provide three memories, or a first memory, a second memory, and a third memory. The data control section 12 transfers data on every three pixels in the horizontal direction and data on every three lines in the vertical direction to the three memories in frames sequentially. In this case, too, the data control section 12 shifts the unread lines image by image and performs control in such manner that read pixel positions do not overlap with one another in consecutive image data. At this time, one frame of image data is created from the thinned-out data corresponding to three consecutive screens.

As shown in FIG. 3, the index value computing section 15 used in the first embodiment is composed of a data taking-in section 21, an absolute difference value detecting section 22, and an adding section 23. The first memory 13 and second memory 14 are connected to the data taking-in section 21. The data taking-in section 21 is connected to the absolute difference value detecting section 22. The absolute difference value detecting section 22 is connected to the adding section 23. The adding section 23 is connected to the direction decision section 16.

In the index value computing section 15 configured as described above, to interpolate an arbitrary point, the data taking-in section 21 takes in the image data in a block of a specific size centered on the pixel position to be interpolated from the first memory 13 and second memory 14. Of the pixel data in the block taken in by the data taking-in section 21, the absolute difference value detecting section 22 extracts a set of pixels adjacent to one another in a specific direction in a plurality of places, and calculates the absolute difference value between the individual sets. The adding section 23 calculates the sum total of the absolute difference values calculated at the absolute difference value detecting section 22 in the specific direction and outputs an index value for each direction.

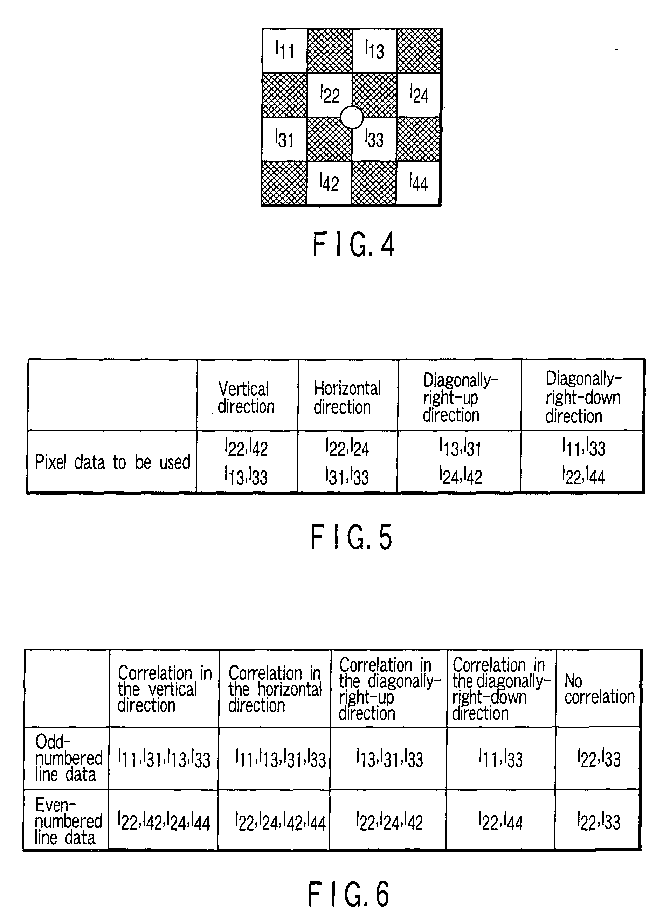

To find the image data interpolated value for the position of a white circle in the center of a block of a specific size (in this case, $4 \times 4$ pixels), the data taken in by the data taking-in section 21 is, for example, as shown in FIG. 4. In FIG. 4, the data of the odd-numbered lines represent the data transferred from the first memory 13. The data of the even-numbered lines represent the data transferred from the second memory 14. That is, in the first embodiment, the image data in a block of $4 \times 4$ pixels obtained by combining the data stored in the two memories 13, 14, centering on the position to be interpolated, are taken in. In FIG. 4, the white pixels represent the image data read.

In the absolute difference value detecting section 22, from the taken-in pixel data, the sets of pixel data used in sensing the absolute difference value in a specific direction are, for example, as shown in FIG. 5. In the example, sensing is done in the following four directions as the specific directions: a horizontal direction, a vertical direction, a diagonally-right-up direction at 45 degrees, and a diagonally-right-down direction at 45 degrees.

The adding section 23 calculates the sum total of the absolute difference values between the sets of pixels in each direction and finds an index value. If the index value for the horizontal direction is $V_{hor}$, the index value for the vertical direction is $V_{ver}$, the index value for the diagonally-right-up direction is $v_{sla}$, and the index value for the diagonally-right-down direction is $V_{bac}$, the index values in the respective directions are determined using the following equation (1):

[Formula 1]

$$\begin{cases} \text{Vertical direction :} \\ \qquad V_{ver} = \left| I_{22} - I_{42} \right| + \left| I_{13} - I_{33} \right| \\ \text{Horizontal direction :} \\ \qquad V_{hor} = \left| I_{22} - I_{24} \right| + \left| I_{31} - I_{33} \right| \\ \text{Diagonally} - \text{right} - \text{up direction :} \\ \qquad V_{sla} = \left| I_{13} - I_{31} \right| + \left| I_{24} - I_{42} \right| \\ \text{Diagonally} - \text{right} - \text{down direction :} \\ \qquad V_{bac} = \left| I_{11} - I_{33} \right| + \left| I_{22} - I_{44} \right| \end{cases} \qquad (1)$$

While in the first embodiment, the index value is determined from the average value of the absolute difference values between two pixels, the present invention is not limited to this. For instance, the accumulated value of the absolute difference values or the ratio of the pixel values at two points may be used. As long as a set of pixels used to find the absolute difference values is a set of pixels arranged in each direction, it is not limited to the set as shown in the Formula 1. Moreover, the number of sets of pixels used to find the absolute difference values is not limited to the case as shown in the Formula 1.

The direction decision section 16 receives the index value data about the specific direction output from the index value computing section 15 and determines the direction in which there is the strongest correlation even in the position to be interpolated. To determine the correlation, the ratio of each index value to another index value is used. That is, if the index value meets the conditions shown in expressions (2) below, it is determined that there is a strong correlation in each direction.

[Formula 2]

$$
\begin{cases}
\text{Correlation in the vertical direction :} \\[4pt]
\dfrac{V_{ver}}{V_{hor}} < \dfrac{V_{sla}}{V_{bac}} \quad \text{and} \quad \dfrac{V_{ver}}{V_{hor}} < \dfrac{V_{bac}}{V_{sla}} \\[4pt]
\text{Correlation in the horizontal direction :} \\[4pt]
\dfrac{V_{hor}}{V_{ver}} < \dfrac{V_{sla}}{V_{bac}} \quad \text{and} \quad \dfrac{V_{hor}}{V_{ver}} < \dfrac{V_{bac}}{V_{sla}} \\[4pt]
\text{Correlation in the diagonally - right - up} \\
\text{direction at 45 degrees :} \\[4pt]
\dfrac{V_{sla}}{V_{bac}} < \dfrac{V_{ver}}{V_{hor}} \quad \text{and} \quad \dfrac{V_{sla}}{V_{bac}} < \dfrac{V_{hor}}{V_{ver}} \\[4pt]
\text{Correlation in the diagonally - right - down} \\
\text{direction at 45 degrees :} \\[4pt]
\dfrac{V_{bac}}{V_{sla}} < \dfrac{V_{ver}}{V_{hor}} \quad \text{and} \quad \dfrac{V_{bac}}{V_{sla}} < \dfrac{V_{hor}}{V_{ver}}
\end{cases} \qquad (2)
$$

If the index value meets none of the above conditions and there is no correlation in each direction, or each index value is smaller than a predetermined specific value and the correlation is almost the same in all of the directions, it is determined that there is no correlation in a specific direction.

Then, the direction decision section 16 outputs an identifying signal caused to correspond to each direction. For example, the following values are output: horizontal direction = 1, vertical direction = 2, diagonally-right-up direction at 45 degrees = 3, diagonally-right-down direction at 45 degrees = 4, and no correlation = 0.

While in the first embodiment, the direction has been determined from the ratio of index values, the present invention is not limited to this. The invention may use a method of determining a direction in which the minimum value of the index value is obtained to be a direction in which there is a strong correlation.

The data control section 12 connected to the switching section 17 switches connections between the two memories 13 and 14 frame by frame and stores consecutive image data in the two memories 13, 14 alternately as described above. Then, the data control section 12 transmits to the switching section 17 a control signal indicating in which memory the latest input data has been recorded. For example, in the case of interlaced scanning, image data made up of the pixel data of the even-numbered lines and image data made up of the pixel data of the odd-numbered lines are stored in the memories 13, 14 in frames sequentially. When the latest input data is the pixel data in the even-numbered lines, "0" is sent as the control signal to the switching section 17. When the latest input data is the pixel data of the odd-numbered lines, "1" is sent as the control signal to the switching section 17.

While numerals have been used as the values of the control signal, the control signal is, of course, not limited to these, as long as it can be determined in which memory the latest input data has been recorded.

According to the identifying signal output from the direction decision section 16 and the control signal from the data control section 12, the switching section 17 switches between the image data stored in the first memory 13 and that in the second memory 14 to select pixel data to be used for interpolation and transfers the selected pixel data to the interpolation section 18.

In the first embodiment, the selected pixel data to be used which is determined on the basis of the identifying signal input from the direction decision section 16 and the control signal from the data control section 12 is, for example, as shown in FIG. 6. In the table of FIG. 6, the direction in which there is a strong correlation is represented horizontally as the horizontal direction, the vertical direction, the diagonally-right-up direction at 45 degrees, and the diagonally-right-down direction at 45 degrees. In addition, the latest input data is represented vertically as even-numbered line data and odd-numbered line data.

Using the pixel data input from the switching section 17, the interpolation section 18 calculates an interpolated value by multiplying the pixel data by the weighting factor according to the position of each pixel data and the distance from the position in which an interpolated value is to be determined and averaging the result. That is, in the first embodiment, according to the latest input data and the direction in which there is a strong correlation, an interpolated value is determined using the following expressions (3) and (4).

«When the latest input data is odd-numbered line data»

[Formula 3]

$$
\begin{cases}
\text{Correlation in the vertical direction :} \\
\quad \frac{1}{4}\left(\frac{I_{11} + 3I_{31}}{4} + 3\,\frac{I_{13} + 3I_{33}}{4}\right) \\
\text{Correlation in the horizontal direction :} \\
\quad \frac{1}{4}\left(\frac{I_{11} + 3I_{13}}{4} + 3\,\frac{I_{31} + 3I_{33}}{4}\right) \\
\text{Correlation in the diagonally - right - up direction :} \\
\quad \frac{1}{2}\left(\frac{I_{31} + I_{13}}{2} + I_{33}\right) \\
\text{Correlation in the diagonally - right - down direction :} \\
\quad \frac{I_{11} + 3I_{33}}{4} \\
\text{No correlation :} \\
\quad \frac{I_{22} + I_{33}}{2}
\end{cases}
\tag{3}
$$

«When the latest input data is even-numbered line data»

[Formula 4]

$$\begin{cases}
\text{Correlation in the vertical direction :} \\
\frac{1}{4}\left(3\frac{3I_{22} + I_{42}}{4} + \frac{3I_{24} + I_{44}}{4}\right) \\
\text{Correlation in the horizontal direction :} \\
\frac{1}{4}\left(3\frac{3I_{22} + I_{24}}{4} + \frac{3I_{42} + I_{44}}{4}\right) \\
\text{Correlation in the diagonally - right - up direction :} \\
\frac{1}{2}\left(I_{22} + \frac{I_{24} + I_{42}}{2}\right) \\
\text{Correlation in the diagonally - right - down direction :} \\
\frac{3I_{22} + I_{44}}{4} \\
\text{No correlation :} \\
\frac{I_{22} + I_{33}}{2}
\end{cases} \qquad (4)$$

While in the first embodiment, weighted average has been used in determining the interpolated value, this invention is not limited to this. Another method, such as the median value, mode value, or arithmetic average of adjacent pixels, may be used.

The image data interpolated this way is transferred from the interpolation section 18 to the output section 19 and is stored in a recording medium, such as a memory card or a hard disk or displayed on a display medium, such as a monitor.

As described above, according to the first embodiment, it is possible to detect with high accuracy a direction in which there is a strong correlation and create a high-accuracy interpolated image.

Furthermore, in the index value computing section 15, for example, by using the difference between the absolute values of pixel sets in the individual directions, such as the difference between the absolute value of $I_{22}$ - $I_{42}$ and the absolute value of $I_{13}$ - $I_{33}$ in the vertical direction, as the index value, it is possible to determine the direction in which the subject or camera moves between frames at the direction decision section 16. Therefore, according to the state of the subject or camera, the switching section 17 can switch the pixel data used in interpolation at the interpolation section 18.

[Second Embodiment]

(Configuration)

In an image interpolation apparatus according to a second embodiment of the present invention, a color filter 30 is provided in front of an image sensor 10. The image of a subject entering the image sensor 10 via a lens system and a low-pass filter (which are not shown) and the color filter 30 is picked up by the image sensor 10. The color video data obtained at the image sensor 10 is converted by an A/D converter 11 into digital color image data.

Under the control of the data control section 12, the color image data output from the A/D converter 11 is transferred to a first memory 13 or a second memory 14 connected to the data control section 12 and stored there.

An index value computing section 15 is connected to the first memory 13 and second memory 14. A direction decision section 16 is connected to the index value computing section 15. The direction decision section 16 receives the data output from the index value computing section 15 and operates on the basis of the data. The direction decision section 16, data control section 12, first memory 13 and second memory 14 are connected to a switching section 17.

The switching section 17 operates on the basis of the control of data control section 12 and the data output from the direction decision section 16. An interpolation section 18 is connected to the switching section 17.

The color image data output from the interpolation section 18 is transferred to an output section 19, such as a monitor or a memory card, which displays the data or records and stores the data.

(Operation)

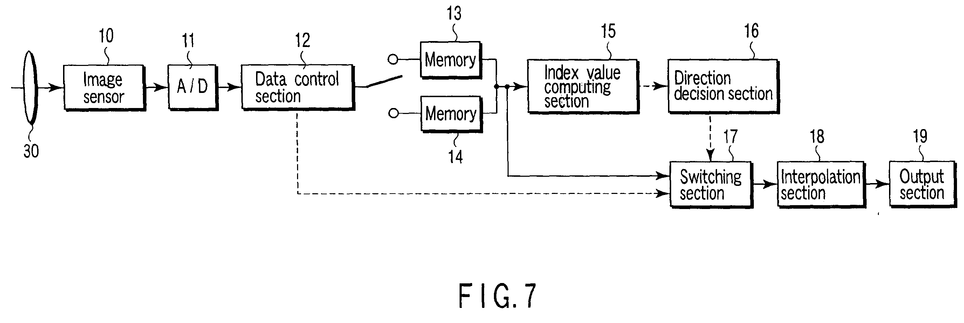

Next, the signal flow in the configuration of FIG. 7 will be explained. The basic operation of the image interpolation apparatus of the second embodiment is almost the same as that of the first embodiment. Therefore, what differs from the first embodiment will be mainly explained.

In the second embodiment, the color filter 30 is provided in front of the image sensor 10. Analog color video data is obtained from the image sensor 10 and is converted by the A/D converter 11 into digital color image data. In the second embodiment, a CMOS (Complementary Metal-Oxide Semiconductor) is used as the image sensor 10. A primary-color Bayer filter composed of the three primary colors, red (R), green (G), and blue (B), is used as the color filter 30. In the Bayer filter, the frequency of appearance of a G pixel is twice that of an R pixel and that of a B pixel.

Under the control of the data control section 12, the color image data read from the image sensor 10 via the A/D converter 11 is stored in the first memory 13 and second memory 14 which are frame memories. That is, the data control section 12 transfers the data to the first memory 13 and the second memory 14 in frames alternately by switching connections between the memories 13 and 14.

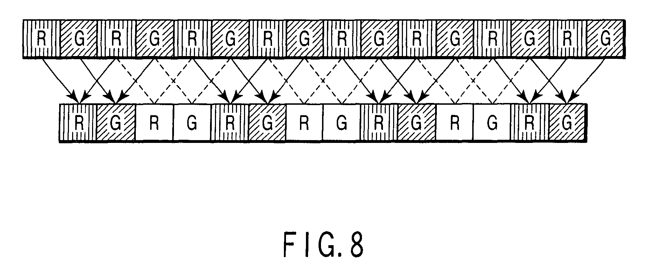

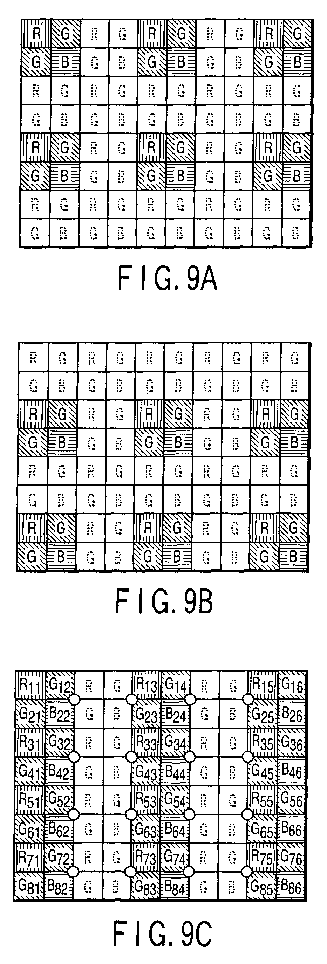

For example, when the size of an image is reduced by half, the data stored in the memories 13, 14 are as follows. Since the image sensor 10 is provided with the primary-color Bayer color filter 30, the pixel data appears repeatedly at intervals of two pixels in both the horizontal direction and the vertical direction. When the image sensor 10 is a CMOS, the pixel data of the same color horizontally adjacent to each other can be averaged and read. This is shown in FIG. 8. In FIG. 8, the pixel group in the upper part represents the input data and the pixel group in the lower part represents the data read out. The pixel data in the line direction is read only once and the pixel data of the same color adjacent to each other in the line direction are added, thereby producing readout data. Therefore, in the horizontal direction, the data is obtained which is equivalent to the result of extracting, in units of two pixels at intervals of two pixels, the pixel data obtained by calculating the arithmetic average of the pixels of the same color adjacent to each other. In the vertical direction, read-out pixel lines and unread pixel lines are repeated at intervals of two lines. As a result, the data formats stored in the two memories 13, 14 are as shown in FIGS. 9A and 9B, respectively. At this time, under the control of the data control section 12, the line read from the image sensor 10 is shifted by changing the position according to each item of image data, with the result that the read line position changes so that the consecutive image data may not overlap with one another.

The data stored in the two memories 13, 14 this way are combined at the switching section 17, thereby producing the data as shown in FIG. 9C. Then, finding an interpolated value in the positions marked with white circles in FIG. 9C enables an interpolated image reduced by half to be created.

While in the second embodiment, the image size has been reduced by half, the percentage at which the image size is enlarged or reduced is not limited to half. For instance, the same holds true when the image size is reduced by one third. In this case, three memories, or a first memory, a second memory, and a third memory, are provided. The data control section 12 transfers the data obtained by calculating the arithmetic average of three pixels of the same color adjacent to one another in the horizontal direction and the data in units of two lines at intervals of six lines in the vertical direction to the three memories sequentially. In this case, too, the data control section 12 performs control in such a manner that the thinning-out position is shifted image by image and the read pixel positions do not overlap with one another in consecutive image data. At this time, one frame of image data is created from the thinned-out data corresponding to the three consecutive screens stored in the memories.

The configuration of the index value computing section 15 of the second embodiment is the same as that of FIG. 3 in the first embodiment. To interpolate an arbitrary point, the data taking-in section 21 takes in the pixel data in a block enclosing the position to be interpolated. Of the pixel data taken in by the data taking-in section 21, the absolute difference value detecting section 22 extracts a set of pixels adjacent to one another in a specific direction in a plurality of places, and calculates the absolute difference value between the pixel values of the individual pixel sets. The adding section 23 calculates the sum total of the obtained absolute difference values in the specific direction and outputs the index value in each direction.

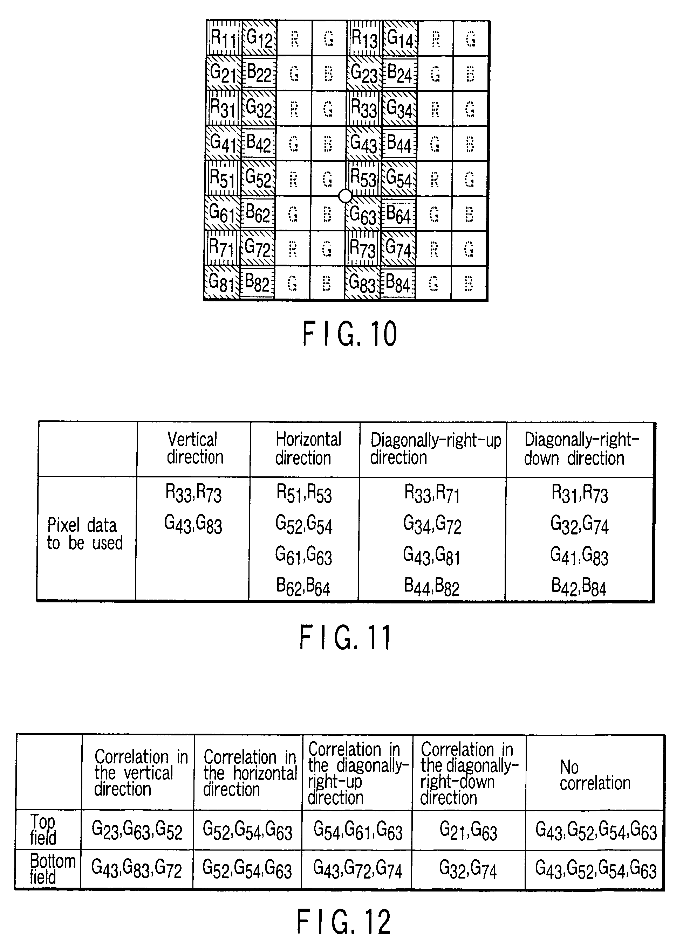

When the image size is reduced by half, the data taken in out of the image memories 13, 14 by the data taking-in section 21 used in the second embodiment is, for example, as shown in FIG. 10. In this case, an interpolated value in the position marked with a white circle in FIG. 10 is calculated. In FIG. 10, the hatched pixels represent the read-out pixel data. In FIG. 10, the line data in the first row ($R_{11}$, $G_{12}$, $R_{13}$, $G_{14}$), the second row ($G_{21}$, $B_{22}$, $G_{23}$, $B_{24}$), the fifth row ($R_{51}$, $G_{52}$, $R_{53}$, $G_{54}$), and the sixth row ($R_{61}$, $B_{62}$, $G_{63}$, $B_{64}$) represent the data transferred from the first memory 13. In FIG. 10, the line data in the third row ($R_{31}$, $G_{32}$, $R_{33}$, $G_{34}$), the fourth row ($G_{41}$, $B_{42}$, $G_{43}$, $B_{44}$), the seventh row ($R_{71}$,

$G_{72}$, $R_{73}$, $G_{74}$), and the eighth row ($R_{81}$, $B_{82}$, $G_{83}$, $B_{84}$) represent the data transferred from the second memory 14. In the second embodiment, the pixel data in a block of $8 \times 8$ pixels including the position to be interpolated by combining the data from the two memories 13 and 14 are taken in.

In the absolute difference value detection section 22, when an interpolated value in the position marked with a white circle in FIG. 10 is estimated, the pixel data set used in detecting the index value for a specific direction from the taken-in pixel data are, for example, as shown in FIG. 11. In the second embodiment, the direction is detected for four patterns, that is, a vertical direction, a horizontal direction, a diagonally-right-up direction at 45 degrees, and a diagonally-right-down direction at 45 degrees. The pixel data of the same color lying in each direction is used. As shown in the table of FIG. 11, the pixels to be used are switched according to a desired direction.

The adding section 23 calculates the sum total of the absolute difference values between the pixel values in each direction and finds an index value. In the second embodiment, if the index value for the vertical direction is $V_{ver}$, the index value for the horizontal direction is $V_{hor}$, the index value for the diagonally-right-up direction at 45 degrees is $V_{sla}$, and the index value for the diagonally-right-down direction at 45 degrees is $V_{bac}$, the index values are determined using the following equations (5):

[Formula 5]

$$
\begin{cases}
\text{Vertical direction :} \\
\quad V_{ver} = \left( \left| R_{33} - R_{73} \right| + \left| G_{43} - G_{83} \right| \right) \times 2 \\
\text{Horizontal direction :} \\
\quad V_{hor} = \left| R_{51} - R_{53} \right| + \left| G_{52} - G_{54} \right| \\
\qquad\qquad + \left| G_{61} - G_{63} \right| + \left| B_{62} - B_{64} \right| \\
\text{Diagonally - right - up direction :} \\
\quad V_{sla} = \left| R_{33} - R_{71} \right| + \left| G_{34} - G_{72} \right| \\
\qquad\qquad + \left| G_{43} - G_{81} \right| + \left| B_{44} - B_{82} \right| \\
\text{Diagonally - right - down direction :} \\
\quad V_{bac} = \left| R_{31} - R_{73} \right| + \left| G_{32} - G_{74} \right| \\
\qquad\qquad + \left| G_{41} - G_{83} \right| + \left| B_{42} - B_{84} \right|
\end{cases}
\tag{5}
$$

The direction decision section 16 receives the index value data about the specific direction output from the index value computing section 15 and outputs the direction in which there is the strongest correlation in the position to be interpolated. As in the first embodiment, to determine the correlation, the ratio of each index value to another index value is used. That is, it is determined in which of the horizontal direction, vertical direction, diagonally-right-up direction at 45 degrees, and diagonally-right-up direction at 45 degrees there is a strong correlation or whether there is no specific correlation. Identifying signals caused to correspond to the respective directions are output.

While in the second embodiment, the index values have been determined from the sum of the absolute difference values between the pixel values, the present invention is not limited to this. For instance, a method of using the ratio of the pixel values at two points may be used. In addition, a group of pixels arranged in a specific direction is not restricted to the group meeting the above equations. Moreover, while the correlation has been determined by the ratio of the index values, a method of finding the minimum value of the index values may be used.

The data control section 12 connected to the switching section 17 switches connections between the two memories 13 and 14 image by image and stores consecutive image data in the two memories 13, 14 alternately. Then, the data control section 12 transmits to the switching section 17 a control signal indicating in which memory the latest input data has been recorded.

For example, when lines to be read and lines not to be read are switched at intervals of two lines, image data is composed of a frame where a period in which the first two lines are read and the following two lines are not read is repeated (hereinafter, this frame is referred to as a top field) and a frame where a period in which the first two lines are not read and the following two lines are read is repeated (hereinafter, this frame is referred to as a bottom field). In this case, when the image data in the top field is the latest input data, the data control section 12 transmits "0" as the control signal to the switching section 17. When the image data in the bottom field is the latest input data, the data control section 12 transmits "1" as the control signal to the switching section 17. As long as the control signal makes it possible to determine which memory data is the latest input data, it is not restricted to "0" and "1". For instance, letters of the alphabet or characters may be used as the control signal.

According to the identifying signal output from the direction decision section 16 and the control signal output from the data control section 12, the switching section 17 switches between the image data stored in the first memory 13 and that in the second memory 14 for interpolation.

In the second embodiment, when G (green) is used in the pixel data used in each case, the pixel data to be used are, for example, as shown in FIG. 12 from the input identifying signal and control signal. In the table of FIG. 12, the directions in which there is a strong correlation are classified into the horizontal direction, the vertical direction, the diagonally-right-up direction at 45 degrees, the diagonally-right-down direction at 45 degrees, and no correlation. In addition, the latest input data is described in the cases of top-field data and bottom-field data.

Using the pixel data that is input from the switching section 17 and lies in the direction in which there is a strong direction, the interpolation section 18 calculates an interpolated value by multiplying the pixel data by the weighting factor according to the position of each pixel data and the distance from the position in which an interpolated value is to be determined and averaging the result.

As a result of determining an interpolated value for each of R, G, and B, the output of the interpolation section 18 becomes color image data.

For example, when there is a strong correlation in the vertical direction, a method of finding an interpolated value for G (green) is shown in FIGS. 13A and 13B. In this case, an interpolated value for the position marked with a black circle is determined temporarily from the pixel data at only two points arranged in the vertical direction in which there is a strong correlation in the pixel data at three points used for interpolation. Then, on the basis of the interpolated value and the image data at the remaining point, an interpolated value for the position marked with a white circle in FIG. 10 is determined.

In the second embodiment, an interpolated value for G in the position marked with a white circle in FIG. 10 is determined using the following expressions (6) and (7), depending on the input data and the direction in which there is a correlation.

«When the latest input data is top-field data»

[Formula 6]

$$\begin{cases} \text{Correlation in the vertical direction :} \\[2mm] \quad \dfrac{1}{6}\,G_{52} + \dfrac{5}{6}\left(\dfrac{G_{23} + 9G_{63}}{10}\right) \\[3mm] \text{Correlation in the horizontal direction :} \\[2mm] \quad \dfrac{1}{2}\left(\dfrac{G_{52} + G_{54}}{2} + G_{63}\right) \\[3mm] \text{Correlation in the diagonally - right - up} \\ \text{direction :} \\[2mm] \quad \dfrac{1}{2}\left(\dfrac{G_{54} + G_{61}}{2} + \dfrac{G_{54} + G_{63}}{2}\right) \\[3mm] \text{Correlation in the diagonally - right - down} \\ \text{direction :} \\[2mm] \quad \dfrac{G_{21} + 7G_{63}}{8} \\[3mm] \text{No correlation :} \\[2mm] \quad \dfrac{13G_{43} + 30G_{63} + 8G_{52} + 13G_{54}}{64} \end{cases} \qquad (6)$$

«When the latest input data is bottom-field data»

[Formula 7]

$$
\begin{cases}
\text{Correlation in the vertical direction :} \\[6pt]
\dfrac{1}{6}\,G_{72} + \dfrac{5}{6}\left(\dfrac{7G_{43} + 3G_{83}}{10}\right) \\[10pt]
\text{Correlation in the horizontal direction :} \\[6pt]
\dfrac{1}{2}\left(\dfrac{G_{52} + G_{54}}{2} + G_{63}\right) \\[10pt]
\text{Correlation in the diagonally – right – up} \\
\text{direction :} \\[6pt]
\dfrac{1}{4}\left(\dfrac{2G_{43} + G_{72}}{3}\right) + \dfrac{1}{4}\,G_{74} \\[10pt]
\text{Correlation in the diagonally – right – down} \\
\text{direction :} \\[6pt]
\dfrac{3G_{32} + 5G_{74}}{8} \\[10pt]
\text{No correlation :} \\[6pt]
\dfrac{13G_{43} + 30G_{63} + 8G_{52} + 13G_{54}}{64}
\end{cases}
\qquad (7)
$$

Similarly, for R and B, too, the interpolated values are determined by the weighted average corresponding to the distance between the position of the pixel data used for interpolation and the distance from the position in which an interpolated value is to be found.

If there is not much pixel data of the same color to be referred to in the vicinity of the position to be interpolated, an interpolated value is found using color correlation with another color.

As described above, in the second embodiment, too, it is possible to detect with high accuracy a direction in which there is a strong correlation and create a high-accuracy interpolated image as in the first embodiment.

In addition, as in the first embodiment, it is possible to determine the direction in which the subject or the camera moves and switch the pixel data used for interpolation according to the state of the subject or camera.

While in the second embodiment, weighted average has been used in determining the interpolated value, this invention is not limited to this. Another method, such as arithmetic average, may be used.

Furthermore, the color filter 30 is not limited to the primary-color type. For instance, a complementary color filter composed of C (cyan), M (magenta), Y (yellow), and G (green) may be used.

Moreover, the image sensor 10 is not restricted to a CMOS. For instance, a CCD (Charge Coupled Device) may be used. In this case, however, the data obtained by sampling is such that the horizontal direction switches positions with the vertical direction.

While the present invention has been described using the first and second embodiment, the invention is not limited to these embodiments and may, of course, be practiced or embodied in still other ways without departing from the spirit or essential character thereof.

For instance, the invention is not restricted to the interpolation of the image data from the image sensor 10 and may be applied to the interpolation of broadcast image data in television or the like.

**Claims**

1.    An image interpolation apparatus which generates a single frame of image data from a plurality of frames of image data consecutively input in time-series order, the image interpolation apparatus **characterized by** comprising:

index value computing means (15) for calculating an index value for a specific direction from at least one group of pixel data arranged in the specific direction in the vicinity of the pixel position in said plurality of frames of image data corresponding to the pixel position of the single frame of image data;

direction decision means (16) for detecting a direction in which there is a strong correlation in the pixel position on the basis of the index value calculated at the index value computing means;

switching means (17) for selecting operation data to be used from said plurality of frames of image data on the basis of the direction detected by the direction decision means and switching operation data; and

interpolation means (18) for determining pixel data in the pixel position using the operation data switched by the switching means.

2. An image interpolation apparatus which generates a single frame of image data from a plurality of frames of color image data consecutively input in time-series order from an image capturing device (10) having a color filter (30) in front of it, the image interpolation apparatus **characterized by** comprising:

index value computing means (15) for calculating an index value for a specific direction from at least one group of pixel data arranged in the specific direction in the vicinity of the pixel position in said plurality of frames of image data corresponding to the pixel position of the single frame of image data;

direction decision means (16) for detecting a direction in which there is a strong correlation in the pixel position on the basis of the index value calculated at the index value computing means;

switching means (17) for selecting operation data to be used from said plurality of frames of image data for each color of the color filter on the basis of the direction detected by the direction decision means and switching operation data; and

interpolation means (18) for determining pixel data in the pixel position using the operation data switched by the switching means.

3. An image interpolation apparatus which generates a single frame of image data whose size is changed in magnification at least one of the horizontal direction and the vertical direction from a plurality of frames of image data consecutively input in time-series order from an image pickup device (10) having a color filter (30) in front of it, the image interpolation apparatus **characterized by** comprising:

index value computing means (15) for extracting discrete pixel data from each of said plurality of frames of image data, selecting at least one group of image data arranged in a specific direction from the pixel data in the vicinity of the pixel position corresponding to the pixel position of the single frame of image data in the extracted pixel data, and calculating an index value for the specific direction;

direction decision means (16) for detecting a direction in which there is a strong correlation in the pixel position on the basis of the index value calculated at the index value computing means;

switching means (17) for selecting operation data to be used from the discrete pixel data for each color of the color filter on the basis of the direction detected by the direction decision means and switching operation data; and

interpolation means (18) for determining pixel data in the pixel position using the operation data switched by the switching means.

4. The image interpolation apparatus according to claim 1, **characterized in that** the index value computing means (15) includes:

data taking-in means (21) for taking in pixel data in the vicinity of the pixel position in said plurality of frames of image data corresponding to the pixel position of the single frame of image data;

absolute difference value detecting means (22) for calculating the absolute difference value between the luminance values of at least one group of pixel data arranged in the specific direction in the pixel data taken in by the data taking-in means; and

adding means (23) for adding the absolute difference values calculated at the absolute difference value detecting means in each of the specific directions.

5. The image interpolation apparatus according to claim 2 or 3, **characterized in that** the index value computing means (15) includes

data taking-in means (21) for taking in pixel data in the vicinity of the pixel position in said plurality of frames of image data corresponding to the pixel position of the single frame of image data;

absolute difference value detecting means (22) for calculating the absolute difference value between the luminance values of at least one group of pixel data of the same color arranged in the specific direction in the pixel data taken in by the data taking-in means; and
adding means (23) for adding the absolute difference values calculated at the absolute difference value detecting means in each of the specific directions.

6. The image interpolation apparatus according to claim 4 or 5, **characterized in that** the data taking-in means takes in thinned-out pixel data from each of said plurality of frames of image data.

7. The image interpolation apparatus according to claim 4 or 5, **characterized in that** the data taking-in means takes in the value obtained by calculating the arithmetic average of adjacent pixel data from each of said plurality of frames of image data.

8. The image interpolation apparatus according to any one of claim 1 to claim 3, **characterized in that** the direction decision means determines a direction in which there is a strong correlation by comparing the ratio of the index values in each of the specific directions.

9. The image interpolation apparatus according to any one of claim 1 to claim 3, **characterized in that** the direction decision means determines a direction in which there is a strong correlation by comparing the absolute values of the index values calculated at the index value computing means in each of the specific directions.

10. The image interpolation apparatus according to claim 4 or 5, **characterized in that** the switching means selects as the operation data the pixels arranged in the direction in which there is a strong correlation in the pixel data taken in by the data taking-in means.

11. The image interpolation apparatus according to any one of claim 1 to claim 3, **characterized in that** the interpolation means determines an interpolated value on the basis of the distance between the pixel position of the single frame of image data and the operation data.

12. The image interpolation apparatus according to any one of claim 1 to claim 3, **characterized in that** the interpolation means determines an interpolated value by weighted average inversely proportional to the distance between the pixel position of the single frame of image data and the operation data.

13. An image interpolation method which generates a single frame of image data from a plurality of frames of image data consecutively input in time-series order, the image interpolation method **characterized by** comprising:

an index value computing step of calculating an index value for a specific direction from at least one group of pixel data arranged in the specific direction in the vicinity of the pixel position in said plurality of frames of image data corresponding to the pixel position of the single frame of image data;
a direction decision step of detecting a direction in which there is a strong correlation in the pixel position on the basis of the index value;
a switching step of selecting operation data to be used from said plurality of frames of image data on the basis of the direction in which there is a strong correlation and switching operation data; and
an interpolation step of determining pixel data in the pixel position using the operation data.

14. An image interpolation method which generates a single frame of image data from a plurality of frames of image data consecutively input in time-series order from an image pickup device having a color filter in front of it, the image interpolation method **characterized by** comprising:

an index value computing step of calculating an index value for a specific direction from at least one group of pixel data arranged in the specific direction in the vicinity of the pixel position in said plurality of frames of image data corresponding to the pixel position of the single frame of image data;
a direction decision step of detecting a direction in which there is a strong correlation in the pixel position on the basis of the index value;
a switching step of selecting operation data to be used from said plurality of frames of image data for each color of the color filter on the basis of the direction in which there is a strong correlation and switching operation data; and
an interpolation step of determining pixel data in the pixel position using the operation data.

15. An image interpolation method which generates a single frame of image data whose size is changed in magnification at least one of the horizontal direction and the vertical direction from a plurality of frames of image data consecutively input in time-series order from an image pickup device having a color filter in front of it, the image interpolation method **characterized by** comprising:

an index value computing step of extracting discrete pixel data from each of said plurality of frames of image data, selecting at least one group of image data arranged in a specific direction from the pixel data in the vicinity of the pixel position corresponding to the pixel position of the single frame of image data in the extracted pixel data, and calculating an index value for the specific direction;

a direction decision step of detecting a direction in which there is a strong correlation in the pixel position on the basis of the index value;

a switching step of selecting operation data to be used from the input discrete pixel data for each color of the color filter on the basis of the direction in which there is a strong correlation and switching operation data; and

an interpolation step of determining pixel data in the pixel position using the operation data.

16. The image interpolation method according to claim 13, **characterized in that** the index value computing step includes a data taking-in step of taking in pixel data in the vicinity of the pixel position in said plurality of frames of image data corresponding to the pixel position of the single frame of image data;

an absolute difference value detecting step of calculating the absolute difference value between at least one group of pixel data arranged in the specific direction in the pixel data taken in; and

an adding step of adding the absolute difference values in each of the specific directions.

17. The image interpolation method according to claim 14 or 15, **characterized in that** the index value computing step includes:

a data taking-in step of taking in pixel data in the vicinity of the position in said plurality of frames of image data corresponding to the pixel position of the single frame of image data;

an absolute difference value detecting step of calculating the absolute difference value between at least one group of pixel data of the same color arranged in the specific direction in the pixel data taken in; and

an adding step of adding the absolute difference values in each of the specific directions.

18. The image interpolation method according to claim 16 or 17, **characterized in that** the data taking-in step takes in thinned-out pixel data from each of said plurality of frames of image data.

19. The image interpolation method according to claim 16 or 17, **characterized in that** the data taking-in step takes in the value obtained by calculating the arithmetic average of adjacent pixel data from each of said plurality of frames of image data.

20. The image interpolation method according to any one of claim 13 to claim 15, **characterized in that** the direction decision step determines a direction in which there is a strong correlation by comparing the ratio of the index values in each of the specific directions.

21. The image interpolation method according to any one of claim 13 to claim 15, **characterized in that** the direction decision step determines a direction in which there is a strong correlation by comparing the absolute values of the index values in each of the specific directions.

22. The image interpolation method according to claim 16 or 17, **characterized in that** the switching step selects as the operation data the pixels arranged in the direction in which there is a strong correlation in the pixel data taken in by the data taking-in step.

23. The image interpolation method according to any one of claim 13 to claim 15, **characterized in that** the interpolation step determines an interpolated value on the basis of the distance between the pixel position of the single frame of image data and the operation data.

24. The image interpolation method according to any one of claim 13 to claim 15, **characterized in that** the interpolation step determines an interpolated value by weighted average inversely proportional to the distance between the pixel position of the single frame of image data and the operation data.

25. An image interpolation apparatus which generates a single frame of color image data whose size is changed in magnification at least one of the horizontal direction and the vertical direction from a plurality of frames of color image data consecutively input in time-series order, the image interpolation apparatus **characterized by** comprising:

index value computing means (15) for extracting discrete pixel data from each of said plurality of frames of color image data, selecting at least one group of pixel data arranged in a specific direction from the pixel data in the vicinity of the pixel position corresponding to the pixel position of the single frame of image data in the extracted pixel data, and calculating an index value for the specific direction;

direction decision means (16) for detecting a direction in which there is a strong correlation in the pixel position on the basis of the index value calculated at the index value computing means;

switching means (17) for selecting operation data to be used from the discrete pixel data for each of a plurality of primary color constituting the color image data on the basis of the direction detected by the direction decision means and switching operation data; and

interpolation means (18) for determining pixel data in the pixel position using the operation data switched by the switching means.

26. An image interpolation method which generates a single frame of color image data whose size is changed in magnification at least one of the horizontal direction and the vertical direction from a plurality of frames of color image data consecutively input in time-series order, the image interpolation method **characterized by** comprising:

index value computing step for extracting discrete pixel data from each of said plurality of frames of color image data, selecting at least one group of pixel data arranged in a specific direction from the pixel data in the vicinity of the pixel position corresponding to the pixel position of the single frame of image data in the extracted pixel data, and calculating an index value for the specific direction;

a direction decision step of detecting a direction in which there is a strong correlation in the pixel position on the basis of the index value;

a switching step of selecting operation data to be used from the discrete pixel data for each of a plurality of primary colors constituting the color image data on the basis of the direction in which there is a strong correlation and switching operation data; and

an interpolation step of determining pixel data in the pixel position using the operation data.

```
10          11         12              13
 ┌────────┐  ┌─────┐  ┌──────────┐        ┌────────┐
 │ Image  │  │     │  │  Data    │      o─┤ Memory │
→│ sensor │→ │ A/D │→ │ control  │─ /     └────────┘
 │        │  │     │  │ section  │   o─── ┌────────┐
 └────────┘  └─────┘  └──────────┘      o─┤ Memory │
                                          └────────┘
                                              14
```

```
           15                    16
      ┌────────────┐      ┌──────────────┐
      │Index value │      │  Direction   │
   ─ →│ computing  │─ - → │decision section│
      │  section   │      │              │
      └────────────┘      └──────────────┘
                                  ¦
                                  ▼ 17        18              19
                          ┌───────────┐  ┌─────────────┐  ┌────────┐
                          │ Switching │  │Interpolation│  │ Output │
                       ──→│  section  │→ │  section    │→ │section │
                          └───────────┘  └─────────────┘  └────────┘
```

FIG. 1

F I G. 2A

F I G. 2B

F I G. 2C

FIG. 2D

FIG. 2E

FIG. 3

FIG. 4

| | Vertical direction | Horizontal direction | Diagonally-right-up direction | Diagonally-right-down direction |
|---|---|---|---|---|
| Pixel data to be used | $I_{22}, I_{42}$ $I_{13}, I_{33}$ | $I_{22}, I_{24}$ $I_{31}, I_{33}$ | $I_{13}, I_{31}$ $I_{24}, I_{42}$ | $I_{11}, I_{33}$ $I_{22}, I_{44}$ |

FIG. 5

| | Correlation in the vertical direction | Correlation in the horizontal direction | Correlation in the diagonally-right-up direction | Correlation in the diagonally-right-down direction | No correlation |
|---|---|---|---|---|---|
| Odd-numbered line data | $I_{11}, I_{31}, I_{13}, I_{33}$ | $I_{11}, I_{13}, I_{31}, I_{33}$ | $I_{13}, I_{31}, I_{33}$ | $I_{11}, I_{33}$ | $I_{22}, I_{33}$ |
| Even-numbered line data | $I_{22}, I_{42}, I_{24}, I_{44}$ | $I_{22}, I_{24}, I_{42}, I_{44}$ | $I_{22}, I_{24}, I_{42}$ | $I_{22}, I_{44}$ | $I_{22}, I_{33}$ |

FIG. 6

FIG.7

FIG.8

FIG. 9A

FIG. 9B

FIG. 9C

| R11 | G12 | R | G | R13 | G14 | R | G |
|---|---|---|---|---|---|---|---|
| G21 | B22 | G | B | G23 | B24 | G | B |
| R31 | G32 | R | G | R33 | G34 | R | G |
| G41 | B42 | G | B | G43 | B44 | G | B |
| R51 | G52 | R | G | R53 | G54 | R | G |
| G61 | B62 | G | B | G63 | B64 | G | B |
| R71 | G72 | R | G | R73 | G74 | R | G |
| G81 | B82 | G | B | G83 | B84 | G | B |

FIG. 10

| | Vertical direction | Horizontal direction | Diagonally-right-up direction | Diagonally-right-down direction |
|---|---|---|---|---|
| Pixel data to be used | $R_{33}, R_{73}$<br>$G_{43}, G_{83}$ | $R_{51}, R_{53}$<br>$G_{52}, G_{54}$<br>$G_{61}, G_{63}$<br>$B_{62}, B_{64}$ | $R_{33}, R_{71}$<br>$G_{34}, G_{72}$<br>$G_{43}, G_{81}$<br>$B_{44}, B_{82}$ | $R_{31}, R_{73}$<br>$G_{32}, G_{74}$<br>$G_{41}, G_{83}$<br>$B_{42}, B_{84}$ |

FIG. 11

| | Correlation in the vertical direction | Correlation in the horizontal direction | Correlation in the diagonally-right-up direction | Correlation in the diagonally-right-down direction | No correlation |
|---|---|---|---|---|---|
| Top field | $G_{23}, G_{63}, G_{52}$ | $G_{52}, G_{54}, G_{63}$ | $G_{54}, G_{61}, G_{63}$ | $G_{21}, G_{63}$ | $G_{43}, G_{52}, G_{54}, G_{63}$ |
| Bottom field | $G_{43}, G_{83}, G_{72}$ | $G_{52}, G_{54}, G_{63}$ | $G_{43}, G_{72}, G_{74}$ | $G_{32}, G_{74}$ | $G_{43}, G_{52}, G_{54}, G_{63}$ |

FIG. 12

F I G. 13A

F I G. 13B

F I G. 14

## INTERNATIONAL SEARCH REPORT

| | International application No. |
|---|---|
| | PCT/JP2004/018296 |

**A. CLASSIFICATION OF SUBJECT MATTER**
Int.Cl⁷ H04N5/232, 9/07

According to International Patent Classification (IPC) or to both national classification and IPC

**B. FIELDS SEARCHED**

Minimum documentation searched (classification system followed by classification symbols)
Int.Cl⁷ H04N5/225-5/257, 9/04-9/11

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2000-244932 A (Mitsubishi Electric Corp.), 08 September, 2000 (08.09.00), Par. Nos. [0001] to [0081]; Figs. 1 to 17 (Family: none) | 1-3,8,9, 11-15,20,21, 23-26<br>4-7,10, 16-19,22 |
| X<br><br>Y | JP 2000-125169 A (Mitsubishi Electric Corp.), 28 April, 2000 (28.04.00), Full text; all drawings (Family: none) | 1-3,8,9, 13-15,20,21, 25,26<br>4-7,10, 16-19,22 |
| X<br><br>Y | JP 2001-285885 A (Fuji Photo Film Co., Ltd.), 12 October, 2001 (12.10.01), Full text; all drawings & US 6469290 B1 | 1-3,8,9, 13-15,20,21, 25,26<br>4-7,10, 16-19,22 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 March, 2005 (08.03.05) | 29 March, 2005 (29.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/018296

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-205808 A   (Fuji Photo Film Co., Ltd.),<br>30 July, 1999 (30.07.99),<br>Full text; all drawings<br>(Family: none) | 4-7,10,<br>16-19,22 |
| P,X | JP 2004-15772 A   (Olympus Corp.),<br>15 January, 2004 (15.01.04),<br>Full text; all drawings<br>& US 2003/231251 A1 | 1-3,9,13-15,<br>21,25,26 |
| P,A | | 4-8,10-12,<br>16-20,22-24 |

**EP 1 703 722 A1**

## REFERENCES CITED IN THE DESCRIPTION

### Patent documents cited in the description

- US 5825429 A